# EUROPEAN PATENT APPLICATION

(11) **EP 4 383 294 A1**
(43) Date of publication of application: **12.06.2024**
(21) Application number: 22875966.8
(22) Date of filing: 21.09.2022
(51) Int. Cl.: H01G 9/00, H01G 9/028, H01G 9/15

(54) **SOLID ELECTROLYTE, SOLID ELECTROLYTIC CAPACITOR, ELECTROCONDUCTIVE POLYMER DISPERSION, METHOD FOR PRODUCING SOLID ELECTROLYTE, AND METHOD FOR PRODUCING ELECTROCONDUCTIVE POLYMER DISPERSION**

(30) Priority: 29.09.2021 JP 2021159668
(71) Applicant: Nippon Chemi-Con Corporation, Tokyo 141-8605 (JP); University of Yamanashi, Kofu-shi, Yamanashi 400-8510 (JP)
(72) Inventor: OKUZAKI, Hidenori, Kofu-shi, Yamanashi 400-8510 (JP); MACHIDA, Kenji, Tokyo 141-8605 (JP); YOSHIOKA, Kyohei, Tokyo 141-8605 (JP); MOGAKI, Katsumi, Tokyo 141-8605 (JP); WAKABAYASHI, Toshiki, Tokyo 141-8605 (JP); NIIOKA, Takashi, Tokyo 141-8605 (JP)
(74) Representative: AWA Sweden AB
(86) International application number: PCT/JP2022/035122
(87) International publication number: WO 2023/054099

(57) **Abstract**

A solid electrolyte that gives high withstand voltage to solid electrolytic capacitors, a solid electrolytic capacitor using this solid electrolyte, conductive polymer dispersion for forming the solid electrolytic capacitor, and a manufacturing method thereof are provided. The solid electrolyte is formed using conductive polymer dispersion and includes conductive polymer in the dispersion. This conductive polymer is poly(3,4-ethylenedioxythiophene) doped with a polyanion and the crystallinity of the conductive polymer is 20 % or less. The solid electrolyte is formed by transpiring a solvent from the conductive polymer dispersion. The conductive polymer dispersion is poly(3,4-ethylenedioxythiophene) doped with a polyanion and is formed by transpiring the conductive polymer with the crystallinity of 20 % or less.

## Description

### FIELD OF INVENTION

The present disclosure relates to a solid electrolyte included in a solid electrolytic capacitor, a solid electrolytic capacitor, conductive polymer dispersion to form said solid electrolyte, and a production method thereof.

### BACKGROUND

Capacitors are used in various application. For example, in the field of power electronics, a power supply circuit, which converts AC power into DC power by a converter circuit and converts said DC power into desired AC power by an inverter circuit, is provided with a smoothing capacitor to suppress pulsation of DC output from the converter circuit, smooth the suppressed DC, and then input the DC to the inverter circuit. Furthermore, for the stable operation and noise removal of a semi-conductor switching element such as gallium nitride, a decoupling capacitor is provided near said semi-conductor switching element.

Along with the recent trend of higher power demand, there is a strong demand for a capacitor with large capacity. The electrolytic capacitor can easily meet this higher power demand, because it can increase the capacity easier than film capacitors. Electrolytic capacitors include valve action metal, such as tantalum or aluminum, as anode foil and cathode foil. A surface of the anode foil is enlarged by making the valve action metal into a sintered body or a shape such as etching foil, and the enlarged surface has dielectric oxide film thereon by treatment such as anode oxidation. An electrolyte intervenes between the anode foil and the cathode foil.

The specific surface area of this electrolytic capacitor can be enlarged by enlarging the surface of the anode foil, which is advantageous to achieve large capacitance and meet higher power demand. Furthermore, the electrolytic capacitor includes the electrolyte in a state of electrolytic solution. An area of the dielectric film of the anode foil that contacts with the electrolytic solution increases. Therefore, the capacitance of the electrolytic capacitor can be further increased, which is suitable for high-capacity demand along the recent higher power demand. However, the electrolytic solution evaporates and volatilize outside over time, and the capacitance of the electrolytic capacitor decreases and the electrostatic tangent of the electrolytic capacitor increases over time, and the electrolytic capacitor dries up.

Accordingly, solid electrolytic capacitors using conductive polymer as the electrolyte are getting attention among the electrolytic capacitors. For example, the conductive polymer is poly(3,4-ethylenedioxythiophene) (PEDOT) in which monomers with π-conjugated double bond are polymerized, and at the time of chemical oxidative polymerization or electrolytic oxidative polymerization, acid compounds such as polyanions are used as dopants, exhibiting high conductivity. Therefore, the solid electrolytic capacitor is advantageous in that equivalent series resistance (ESR) becomes low.

### PRIOR ART DOCUMENT

### PATENT DOCUMENT

Patent Document 1: JP2003-160647A
Patent Document 2: JP2008-258224A

### SUMMARY OF INVENTION

### PROBLEMS TO BE SOLVED BY INVENTION

Accordingly, the solid electrolytic capacitor does not have the risk for electrolytic solution to dry-up and is easier to achieve low ESR when compared with an electrolytic capacitor using electrolytic solution. Meanwhile, in the field of power electronics, a capacitor with high withstand voltage of at least more than 250 V is expected. A capacitor using electrolytic solution has high withstand voltage due to the defect repairing effect for dielectric oxide film by the electrolytic solution, however, it is not easy even for such a capacitor to meet a demand for high withstand voltage.

The solid electrolytic capacitor has difficulty in satisfying high withstand voltage in comparison with the electrolytic capacitor using electrolytic solution from the viewpoint of the adhesion to the anode foil and the defect repairing effect for dielectric oxide film. Therefore, conventionally, in the field requiring the withstand voltage of more than 250 V, the solid electrolytic capacitor was hardly chosen even with long lifetime and low ESR.

The present disclosure is proposed to address the above-described problem, and the objective is to provide a solid electrolyte that gives high withstand voltage to solid electrolytic capacitors, a solid electrolytic capacitor using this solid electrolyte, conductive polymer dispersion for forming the solid electrolytic capacitor, and a manufacturing method thereof.

### MEANS TO SOLVE THE PROBLEM

To address the above-described problem, a solid electrolyte of the present disclosure is a solid electrolyte formed from conductive polymer dispersion containing a conductive polymer, and the conductive polymer is doped poly(3,4-ethylenedioxythiophene) or derivatives thereof, and crystallinity of the conductive polymer is 20 % or less.

The derivatives may be poly(2-ethyl-3,4-ethylenedioxythiphene) or poly(2-butyl-3,4-ethylenedioxythiphene).

The solid electrolyte may include one type or two or more types of the conductive polymer.

The conductive polymer may be the doped poly(3,4-ethylenedioxythiophene), and the solid electrolyte may be formed using the conductive polymer dispersion with pH of 10 or more.

The solid electrolyte may be formed using conductive polymer dispersion with pH of 4 or less.

The conductive polymer may be doped with polyanions.

The solid electrolyte may include sorbitol.

An electrolytic capacitor including the solid electrolyte, anode foil, cathode foil, and dielectric oxide film contacting with the solid electrolyte is also an aspect of the present disclosure.

Furthermore, the conductive polymer dispersion at least containing the doped poly(3,4-ethylenedioxythiophene) or derivatives thereof and the conductive polymer dispersion with crystallinity of the conductive polymer formed from the conductive polymer dispersion of 20 % are also aspects of the present disclosure.

Furthermore, to address the above-described problem, a manufacturing method of a solid electrolyte includes to transpire at least a part of a solvent from a conductive polymer dispersion which is poly(3,4-ethylenedioxythiophene) doped with polyanions, or derivatives thereof and which conductive polymer with crystallinity of 20 % or less is dispersed.

Furthermore, to address the above-described problem, a manufacturing method of conductive polymer dispersion includes to disperse a conductive polymer which is poly(3,4-ethylenedioxythiophene) doped with polyanions, or derivatives thereof and which has crystallinity of 20 % or less.

### EFFECT OF INVENTION

According to the present disclosure, the solid electrolytic capacitor with high withstand voltage can be achieved.

### BRIEF DESCRIPTION OF DRAWINGS

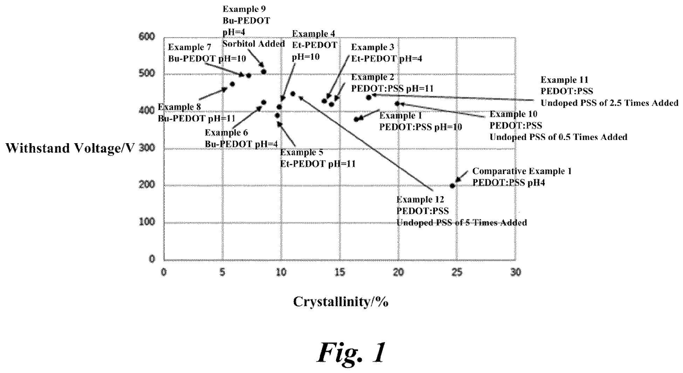

Fig. 1 is a distribution diagram indicating the relationship betwen the crystallinity of the conductive polymer and the withstand voltage of the solid electrolytic capacitor.

### EMBODIMENTS

Hereinafter, the embodiment of the present disclosure will be described. Note that the present disclosure is not limited to the following examples.

### (Solid electrolyte)

The solid electrolyte intervenes between anode foil and cathode foil of a solid electrolytic capacitor. The solid electrolytic capacitor is a passive element that stores and discharges electric charge according to the capacitance, in which the anode foil and the cathode foil face each other via a separator, and the solid electrolyte intervenes between the anode foil and the cathode foil. In the solid electrolytic capacitor, the solid electrolyte contacts with dielectric film formed on the anode foil and acts as a true cathode of the solid electrolytic capacitor.

The solid electrolyte is formed using conductive polymer dispersion. The conductive polymer dispersion is solution in which particles or powder of the conductive polymer is dispersed, and the conductive polymer attaches to the anode foil, the cathode foil, and the separator as the solid electrolyte. That is, the solid electrolyte includes the conductive polymer.

The conductive polymer is attached to the anode foil, the cathode foil, and the separator by immersing each of the anode foil, the cathode foil, and the separator in the conductive polymer dispersion and drying them. Furthermore, the anode foil and the cathode foil are wound or laminated via the separator to produce the capacitor element, and then the capacitor element is immersed in the conductive polymer dispersion and is dried. The conductive polymer dispersion may be applied by droplet or by spraying other than immersion. The drying process may be repeated for multiple times and may be performed under depressurized environment.

The conductive polymer may be poly(3,4-ethylenedioxythiophene) expressed by the below chemical formula (1).

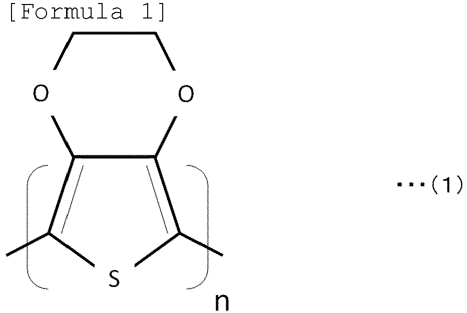

Furthermore, the conductive polymer may be derivatives of poly(3,4-ethylenedioxythiophene), other than poly(3,4-ethylenedioxythiophene) which is called PEDOT. For example, such derivatives have substituted groups such as an alkyl group with the carbon number of 1 to 16. For example, such derivatives may be poly(2-alkyl-3,4-ethylenedioxythiophene) expressed by the below chemical formula (2), which is 3,4-ethylenedioxythiophene with an alkyl group as a substituent at 2-position.

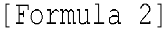

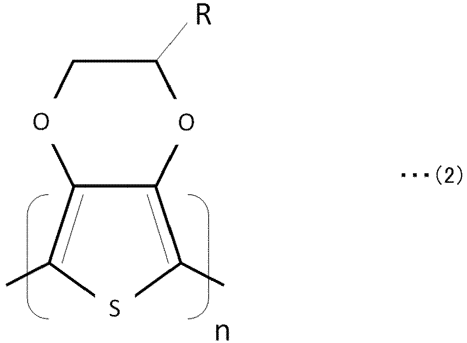

In the formula, R is an alkyl group with the carbon number of 1 to 16.

2-Alkyl-3,4-ethylenedioxythiophene expressed by the above formula (2) is preferably poly(2-ethyl-3,4-ethylenedioxythiophene) in which the substituent at 2-position is an ethyl group, poly(2-propyl-3,4-ethylenedioxythiophene) in which the substituent at 2-position is a propyl group, or poly(2-butyl-3,4-ethylenedioxythiophene) in which the substituent at 2-position is a butyl group.

In particular, 2-Alkyl-3,4-ethylenedioxythiophene expressed by the above formula (2) is preferably poly(2-ethyl-3,4-ethylenedioxythiophene) in which the substituent at 2-position is an ethyl group, or poly(2-butyl-3,4-ethylenedioxythiophene) in which the substituent at 2-position is a butyl group. The crystallinity of the conductive polymer substituted by the alkyl group with the carbon number such as an ethyl group or a butyl group can be easily reduced, as described later, and conductivity thereof and dispersibility thereof to the conductive polymer dispersion is easily increased. If the dispersibility to the conductive polymer dispersion is high, the uniform adhesion of the dielectric film becomes easy, and the equivalent series resistance (ESR) is reduced.

This conductive polymer exhibits conductivity due to the doping. As the dopant, known dopants may be used without limitation. The dopant may be used in single or in combination of two or more. Furthermore, the dopants may also be polymers or monomers. For example, the dopant may be inorganic acid such as polyanion boric acid, nitric acid, and phosphoric acid, and organic acid such as acetic acid, oxalic acid, citric acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid.

For example, the polyanion may be polymers consisting of only component units with anion groups or polymers consisting of component units with anion groups and component units without anion groups, and may be substituted or unsubstituted polyalkylene, substituted or unsubstituted polyalkenylene, substituted or unsubstituted polyimide, substituted or unsubstituted polyamide, substituted or unsubstituted polyester. In detail, the polyanion may be polyvinyl sulfonic acid, polystyrene sulfonic acid that is also referred to as PSS, polyaryl sulfonic acid, polyacrylic sulfonic acid, polymethacrylic sulfonic acid, poly(2-acrylamide-2-methylpropane sulfonic acid), polyisoprene sulfonic acid, polyacrylic acid, polymethacrylic acid, polymaleic acid, etc.

Note that the average molecular weight of the polyanion is 1000 to 2000000, and preferably 10000 to 500000. The average molecular weight of less than 1000 is not preferable because the conductive polymer of the obtained conductive polymer will not be enough and the dispersibility decreases, and the average molecular weight of more than 2000000 is not preferable because the viscosity of the mixture solution increases.

The crystallinity of the conductive polymer is 20 % or less. The conductive polymer with the crystallinity odf 20 % or less among the doped poly(3,4-ethylenedioxythiophene) or derivatives thereof are dispersed in the conductive polymer dispersion and are incorporated in the solid electrolytic capacitor as the solid electrolyte. The solid electrolyte formed using this conductive polymer dispersion improves the withstand voltage of the solid electrolytic capacitor.

Here, the crystallinity is defined as a ratio of crystallized PEDOT or derivatives thereof among the total of amorphous dopants and crystalline PEDOT or derivatives thereof. In detail, the crystallinity is calculated from a ratio of the peak area of the crystal components relative to the total peak area in the X-ray diffraction. The total peak area is a sum of the peak area of the crystal component and the halo pattern area of the amorphous component. The X-ray diffraction measurement for calculating the crystallinity is obtained by measuring a range of measurement angle of 2 to 50 °C at scanning speed of 10°/min, voltage of 40 kV, current of 15 mA using CuKα beam as the X-ray source.

The crystallinity of the conductive polymer can be adjusted to 20 % or less depending on the selected types of the conductive polymer. Furthermore, the crystallinity of the conductive polymer can be adjusted to 20 % or less by adjusting pH of the conductive polymer dispersion depending on the selected types of the conductive polymer. Moreover, the crystallinity of the conductive polymer can be adjusted to 20 % or less by selecting the types of the conductive polymer and additionally adding undoped PSS to the conductive polymer dispersion.

That is, when the doped poly(3,4-ethylenedioxythiophene) is selected as the conductive polymer, pH of the conductive polymer dispersion is 10 or more. By this, the crystallinity of the doped poly(3,4-ethylenedioxythiophene) decreases to 20 % or less.

When poly(3,4-ethylenedioxythiophene) doped with polyanions is selected as the conductive polymer, PSS that is polystyrene sulfonic acid may be added to the conductive polymer dispersion. By this, the crystallinity of the conductive polymer can also be reduced. Additionally added PSS is added after the conductive polymer was formed by polymerization reaction, and dissolves in the conductive polymer dispersion in an undoped state. Then, when the solid electrolyte is formed using the conductive polymer dispersion containing undoped PSS and the conductive polymer, the withstand voltage of the solid electrolytic capacitor is largely improved.

It is preferable that the undoped PSS is contained in the conductive polymer dispersion so that the weight ratio of the polyanion (A) doped to the conductive polymer and undoped PSS (B) is A:B = 2.5:0.2 or more. Otherwise, the weight ratio of the total amount of the doped polyanion and undoped PSS relative to poly(3,4-ethylenedioxythiophene) or derivatives thereof is 2.7 or more. Otherwise, the weight ratio of undoped PSS relative to poly(3,4-ethylenedioxythiophene) or derivatives thereof is 0.2 or more.

By this, the crystallinity of the conductive polymer decreases to 20 % or less even in the conductive polymer dispersion with pH of 4.5 or less. Accordingly, when the solid electrolyte is formed using the conductive polymer dispersion containing undoped PSS, the withstand voltage of the solid electrolytic capacitor is further increased in comparison with the case in which pH of the conductive polymer dispersion is 10 or more.

Further preferably, the weight ratio of the polyanion (A) doped to the conductive polymer and undoped PSS (B) is A:B = 2.5:0.2 to 4.5. Otherwise, the weight ratio of the total amount of the doped polyanion and undoped PSS relative to poly(3,4-ethylenedioxythiophene) or derivatives thereof is 2.7 to 7. Otherwise, the weight ratio of undoped PSS relative to poly(3,4-ethylenedioxythiophene) or derivatives thereof is 0.2 to 4.5.

Particularly preferably, the weight ratio of the polyanion (A) doped to the conductive polymer and undoped PSS (B) is A:B = 2.5:0.2 to 2.5. Otherwise, the weight ratio of the total amount of the doped polyanion and undoped PSS relative to poly(3,4-ethylenedioxythiophene) or derivatives thereof is 2.7 to 5. Otherwise, the weight ratio of undoped PSS relative to poly(3,4-ethylenedioxythiophene) or derivatives thereof is 0.2 to 2.5.

By this the capacitance of the solid electrolytic capacitor is improved, in addition to the withstand voltage of the solid electrolytic capacitor. Note that, even if the addition amount of undoped PSS exceeds the particularly preferable range, the withstand voltage is further improved when the amount of undoped PSS increases and the crystallinity decreases. However, if the addition amount of undoped PSS exceeds the particularly preferable range, the capacitance exceeds the peak and the equivalent series resistance (ESR) increases.

When poly(2-ethyl-3,4-ethylenedioxythiophene), poly(2-propyl-3,4-ethylenedioxythiophene), or poly(2-butyl-3,4-ethylenedioxythiophene) was selected as the conductive polymer, a presence of the substituent causes distortion in the conductive polymer and worsens the alignment, and by this, the crystallinity can be reduced. For example, pH of the conductive polymer dispersion of the conductive polymer with these substituents such as ethyl group, propyl group, and butyl group at 2-position may be wide range of pH such as pH 4 or less.

It is preferable to select poly(2-ethyl-3,4-ethylenedioxythiophene) as the conductive polymer while adjusting pH of the conductive polymer dispersion to 4.5 or less, and if the conductive polymer dispersion is strongly acidic, the withstand voltage of the solid electrolytic capacitor tends to improve. Furthermore, It is preferable to select poly(2- butyl -3,4-ethylenedioxythiophene) as the conductive polymer while adjusting pH of the conductive polymer dispersion to 10 or more, and even if the acidity of the conductive polymer dispersion decreases, the crystallinity is low and the withstand voltage of the solid electrolytic capacitor tends to improve.

Therefore, poly(2-ethyl-3,4-ethylenedioxythiophene) is selected as the conductive polymer, while undoped PSS is added to the conductive polymer dispersion. Then, by adjusting undoped PSS within the particularly preferable range, the withstand voltage is synergistically improved while increasing the capacitance, relatively suppressing the ESR.

The solid electrolyte may include various additives such as polyhydric alcohol, in addition to the conductive polymer. The polyhydric alcohol may be sorbitol, ethylene glycol, diethylene glycol, triethylene glycol, polyoxyethylene glycol, glycerin, polyoxyethylene glycerin, xylitol, erythritol, mannitol, dipentaerythritol, pentaerythritol, or combination of two or more. Since the boiling point of the polyhydric alcohol is high, the polyhydric alcohol remains in the solid electrolyte layer even after the drying process, so that ESR reduction and withstand voltage improvement can be achieved.

In particular, it is preferable to include sorbitol in the solid electrolyte. Sorbitol contributes excellently to improve the withstand voltage. It is preferable to include the solid electrolyte to occupy 67 wt% to 88 wt% of the total of the conductive polymer and sorbitol. In this range, the improvement effect of sorbitol for the withstand voltage increases, and the capacity appearance rate and the equivalent series resistance of the solid electrolytic capacitor becomes particularly excellent because more conductive polymers can be included in the solid electrolyte.

The conductive polymer dispersion is used to form the solid electrolyte after dispersing such conductive polymers, and adding undoped PSS if necessary, adding the additives such as sorbitol if necessary, and adjusting pH according to the conductive polymer if necessary. For example, a pH adjuster may be ammonia water. When considering the effect to the anode foil and the cathode foil, pH of 3.0 or more is preferable. The solvent of the conductive polymer dispersion may be any solvent if particles or powder of the conductive polymer disperses thereto, and for example, water, organic solvents, or mixtures thereof is used. The organic solvent of the conductive polymer dispersion may be polar solvents, alcohol, esters, hydrocarbon, carbonate compounds, ether compounds, linear ether, heterocyclic compounds, and nitrile compounds, etc.

The polar solvent may be N-methyl-2-pyrrolidone, N,N-dimethylformamide, N,N-dimethylacetoamide, and dimethylsulfoxide. The alcohol may be methanol, ethanol, propanol, and butanol, etc. The ester may be ethyl acetate, propyl acetate, and butyl acetate, etc. The hydrocarbon may be hexane, heptane, benzene, toluene, and xylene, etc. The carbonate compound may be ethylene carbonate and propylene carbonate, etc. The ether compound may be dioxane, diethylether, etc. The linear ether may be ethylene glycol alkyl ether, propylene glycol alkyl ether, polyethylene glycol dialkyl ether, and polypropylene glycol alkyl ether, etc. The heterocyclic compound may be 3-methyl-2-oxazolidinone, etc. The nitrile compound may be acetonitrile, glutaronitrile, methoxyacetonitrile, propionitrile, and benzonitrile, etc.

Furthermore, the conductive polymer dispersion may include other compounds. For example, common additives such as organic binders, surfactant, dispersant, defoamer, coupling agent, antioxidant, UV absorber, and the like may be added.

In the production process of the conductive polymer dispersion, for example, monomers forming the conductive polymer and acid releasing the dopant forming the conductive polymer, or alkali metal salt thereof are added, an supporting electrolyte is added, electrolytic oxidative polymerization is performed while stirring, and then, impurities and residual monomers are removed by purification such as ultrafiltration, cation exchange, and anion exchange. The conductive polymer dispersion is obtained by this preparing process. Then, pH of the conductive polymer dispersion is adjusted by the pH adjuster, dispersion process is performed using ultrasonic and the like, polyhydric alcohol such as ethylene glycol was added, and further dispersion process is performed using ultrasonic and the like.

The supporting electrolyte is not particularly limited and is compounds releasing the dopant included in the conventional conductive polymer, and for example, inorganic acid such as boric acid, nitric acid, phosphoric acid, tungstophosphoric acid, and molybdophosphoric acid, organic acid such as acetic acid, oxalic acid, citric acid, tartaric acid, squaric acid, rosinic acid, croconic acid, and salicylic acid, and sulfonic acid such as methane sulfonic acid, dodecyl sulfonic acid, trifluoromethane sulfonic acid, p-toluene sulfonic acid, dodecylbenzene sulfonic acid, 1,2-dihydroxy-3,5-benzene disulfonic acid, naphthalene sulfonic acid, naphthalene disulfonic acid, propylnaphthalene sulfonic acid, butylnaphthalene sulfonic acid, and salt thereof may eb used. Furthermore, polycarboxylic acid such as polyacrylic acid, polymethacrylic acid, and polymaleic acid, polysulfonic acid such as polystyrene sulfonic acid and polyviniyl sulfonic acid, and salt thereo may be used as the supporting electrolyte. Moreover, boron complexes such as borodisalicylic acid, borodioxalic acid, borodimalonic acid, borodisuccinic acid, borodiadipic acid, borodimaleic acid, borodiglycolic acid, borodilactic acid, borodihydroxyisobutyric acid, borodimalic acid, boroditartaric acid, borodicitric acid, borodiphthalic acid, borodihydroxybenzoic acid, borodimandelic acid, and borodibenzyl acid, sulfonylimido acid, and salt thereof may be used as the supporting electrolyte.

The salt may be alkali metal salt such as lithium salt, sodium salt, and potassium salt, ammonium salt, alkyl ammonium salt such as ethyl ammonium salt and butyl ammonium salt, dialkyl ammonium salt such as diethyl ammonium salt and dibutyl ammonium salt, trialkyl ammonium salt such as triethyl ammonium salt and tributyl ammonium salt, and tetraalkyl ammonium salt such as tetraethyl ammonium salt and tetrabutyl ammonium salt.

The electrolytic oxidative polymerization is performed by either of the constant potential method, the constant current method, or the potential sweep method. In the constant potential method, potential of 1.0 to 1.5 V is suitable for a saturated calomel electrode, in the constant current method, current of 1 to 10000 µA/cm2 is suitable, and in the potential sweep method, it is suitable to sweep the range of 0 to 1.5 V for a saturated calomel electrode at a speed of 5 to 200 mV. Although there is no strict limitation for the polymerization temperature, the temperature is generally in the range of 10 to 60 °C. The polymerization time is generally in the range of 10 minutes to 30 hours.

Furthermore, in the production process of the conductive polymer dispersion, for example, monomers forming the conductive polymer and acid releasing the dopant forming the conductive polymer, or alkali metal salt thereof are added, an oxidant is added, chemical oxidative polymerization is performed while stirring, and then, impurities and residual monomers are removed by purification such as ultrafiltration, cation exchange, and anion exchange. The conductive polymer dispersion is obtained by this preparing process. Then, pH of the conductive polymer dispersion is adjusted by the pH adjuster, dispersion process is performed using ultrasonic and the like, polyhydric alcohol such as sorbitol and ethylene glycol was added, and further dispersion process is performed using ultrasonic and the like.

Trivalent iron salt such as iron (III) p-toluen sulfonate, iron (III) naphthalene sulfonic acid, and iron (III) anthraquinone sulfonate, or peroxodisulfate salt such as peroxiodisulfuric acid, ammonium peroxodisulfate, and sodium peroxodisulfate may be used as the oxidante, and they may be used in single or in combination of two or more. In the chemical oxidative polymerization, although there is no strict limitation for the polymerization temperature, and the temperature is generally in the range of 10 to 60 °C. The polymerization time is generally in the range of 10 minutes to 30 hours.

Note that, in the electrolytic oxidative polymerization and chemical oxidative polymerization, the solvent is not particularly limited if the solvent can dissolve the desired amount of the monomers and the supporting electrolyte and does not affect the electrolytic polymerization. For example, the solvent may be water, methanol, ethanol, isopropanol, butanol, ethylene glycol, acetonitrile, butyronitorile, acetone, methylethylketone, tetrahydrofuran, 1,4-dioxan, γ-butyrolactone, methyl acetate, ethyl acetate, methyl benzoate, ethyl benzoate, ethylene carbonate, propylene carbonate, nitromethane, nitrobenzene, sulfolane, and dimethyl sulfolane. These solvents may be used in single or in combination of two or more.

### (Solid Electrolytic Capacitor)

For example, the solid electrolytic capacitor is a wound-type. The anode foil and the cathode foil are long foil bodies formed of valve acting metal. The valve action metal is aluminum, tantalum, niobium, niobium oxide, titanium, hafnium, zirconium, zinc, tungsten, bismuth, and antimony, etc. The purity of the anode foil is desirably 99.9% or more, and the purity of the cathode foil is desirably 99% or more, however impurities such as silicon, iron, copper, magnesium, and zinc may be included.

The anode foil is a sintered body obtained by sintering powder of valve action metal or etching foil obtained by etching stretched foil and has porous structure on a surface thereof. The porous structure is formed by tunnel-shaped etching pits, spongy pits, or voids between dense powder. Typically, the porous treatment structure is formed by direct current etching or alternating current etching in which direct current or alternating current is applied in acidic aqueous solution containing halogen ions such as hydrochloric acid, or is formed by depositing or sintering metal particles, and the like on a core. The porous structure may be formed on a surface of the electrode at the cathode-side as necessary.

The dielectric film is a dielectric layer od the solid electrolytic capacitor and typically is oxide film formed on a surface layer of the anode foil. When the anode foil is aluminum foil, the dielectric film is an aluminum oxide layer obtained by oxidizing a porous structure region. This dielectric film is formed by applying voltage in solution without halogen ions such as aqueous solution of adipic acid, boric acid, etc. The dielectric film may be formed on the cathode foil if necessary, and may be formed by vapor deposition of a layer consisting of metal nitrides, metal carbides, or metal carbonitrides, or may be produced by using material containing carbon on a surface thereof.

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in combination.

Note the separator separates the anode foil and the cathode foil and holds the solid electrolyte between the anode foil and the cathode foil to prevent short-circuit between the anode foil and the cathode foil. If the solid electrolyte can keep its shape on its own and can hold the pair of electrodes apart from each other by the solid electrolyte, the separator can be omitted from the solid electrolytic capacitor.

The solid electrolytic capacitor may only include the solid electrolyte, or the electrolytic solution may be used together. The electrolytic solution is impregnated in the capacitor element after the attachment process of the conductive polymer and the drying process. The electrolytic solution bears the repairing of at least the dielectric oxide film.

The solvent of the electrolytic solution is not particularly limited, and a protic organic polar solvent or an aprotic organic polar solvent may be used. The protic polar solvent may be monohydric alcohol, polyhydric alcohol, oxyalcohol compounds, and water, and for example, is ethylene glycol or propylene glycol. The aprotic polar solvent may be sulfones, amides, lactones, cyclic amides, nitriles, sulfoxides, and the like, and for example, is sulfolane, γ-butyrolactone, ethylene carbonate, or propylene carbonate.

A solute included in the electrolytic solution includes anion and cation components, and is typically organic acid such as adipic acid and benzoic acid or salt thereof, inorganic acid such as boric acid and phosphoric acid or a salt thereof, or a composite compound of organic acid and inorganic acid such as borodisalicylic acid or ion-dissociative salt thereof, and is used single or in combination of two or more. At least one salt of the organic acid, the inorganic acid, and the composite compound of organic acid and inorganic acid may be ammonium salt, quaternary ammonium salt, quaternary amidinium salt, amine salt, sodium salt, and potassium salt, etc. Acid that is the anion and base that is the cation may be separately added to the electrolytic solution as solute components.

Furthermore, other additives may be added to the electrolytic solution. The additive may be polyethylene glycol, complex compounds of boric acid and polysaccharides (mannit, sorbit, etc.), complex compounds of boric acid and polyhydric alcohol, borate esters, nitro compounds, phosphate esters, and colloidal silica, etc. These may be used in single or in combination of two or more. The nitro compound suppresses an amount of hydrogen gas produced in the electrolytic capacitor. The nitro compound may be o-nitrobenzoic acid, m-nitrobenzoic acid, p-nitrobenzoic acid, o-nitrophenol, m-nitrophenol, and p-nitrophenol, etc.

Note that, the solid electrolytic capacitor is completed by inserting the capacitor element formed by the solid electrolyte or the capacitor element further impregnated with the electrolytic solution into a cylindrical outer casing with a bottom. The outer casing is a metal container with a bottom at one end and an opening at the other end and may be formed of aluminum, aluminum alloy containing aluminum and manganese, or stainless steel. After the capacitor element is housed in the outer casing, the opened end of the outer casing is sealed by a sealing body. The sealing body is rubber or a laminated body of rubber and hard substrates, and the rubber may be ethylene propylene rubber or butyl rubber, etc. The sealing body is fit on the end of the outer casing, and the opened end of the outer casing is crimped so that the sealing body is sealed. Lead wire connected to the anode foil and the cathode foil is drawn out from the sealing body.

The solid electrolytic capacitor may be a flat-plate type. In the flat-plate type solid electrolytic capacitor, the anode is a long flat plate formed of valve action metal. The flat plate at the anode side is immersed in the conductive polymer dispersion, and the solid electrolyte is formed to cover the dielectric film. Next, carbon paste is printed on the layer of the solid electrolyte by a screen printer and the like, and is dried. By this drying process, the carbon layer is formed on the solid electrolyte layer. Furthermore, metal paste such as silver paste is printed ont the carbon layer and is dried. By this drying process, the silver layer is formed on the carbon layer. These carbon layer and silver layer corresponds to the cathode of the solid electrolytic capacitor.

For example, the capacitor element is coated by laminated film. Otherwise, the capacitor element is sealed by molding, dip coating, or printing resin such as heat-resistant resin and insulative resin.

Hereinafter, the present disclosure will be described in more detail based on examples. Note that the present disclosure is not limited to the following examples.

Next, the solid electrolytic capacitor of the examples 1 was produced. Aluminum foil was prepared as the anode foil. DC etching was performed on both surface of the aluminum foil to form tunnel-shaped pits. In the DC etching process, DC current was applied to the aluminum foil in aqueous solution including hydrochloric acid to form the pits, and then DC current was applied to the aluminum foil in aqueous solution including nitric acid to enlarge the pits,

Furthermore, the aluminum foil to which the tunnel-shaped pits had been formed was transferred to the chemical treatment process, and the dielectric film was formed on the aluminum foil. In the chemical treatment process, the aluminum foil was immersed in ammonium borate aqueous solution of 90 °C, and said aluminum foil was conducted with the current density of 25 mA-2 until voltage reached the chemical treatment voltage of 650V, and then said voltage was maintained for 20 minutes. The aluminum foil was punched into a desired electrode shape, and the chemical treatment process was performed to the exposed end surface again, and the end surface was covered with silicone resin for insulation.

Furthermore, conductive polymer dispersion in which poly(3,4-ethylenedioxythiophene (PEDOT:PSS) doped with polystyrene sulfonic acid (PSS) had been dispersed as the conductive polymer was produced. This conductive polymer was dispersed in the conductive polymer dispersion in a ratio of 1 wt%. The solvent of the conductive polymer dispersion was water, and pH of the conductive polymer dispersion was adjusted to pH10 by ammonia water with the concentration of 28%. The dispersion process of the conductive polymer using ultrasonic was performed on the conductive polymer dispersion, 3,3 ml of ethylene glycol was added to the 30cc of the conductive polymer dispersion, and the same dispersion process using ultrasonic was performed.

80 µl of the conductive polymer dispersion was dropped on the anode foil with the projected area of 1 cm2. Then, the anode foil was placed still under the environment of 60 °C for 10 minutes, and was further placed still under the environment of 110 °C for 30 minutes, to dry the anode foil. By this, the solid electrolyte of the conductive polymer was formed on the anode foil.

After the solid electrolyte was formed, carbon paste was applied on the solid electrolyte and was cured by placing the anode foil still under the environment of 110 °C for 30 minutes. Furthermore, copper foil was adhered as the drawn-out terminal, at the same time as the application of silver paste on the carbon layer. The silver paste was cured by placing the anode foil still under the environment of 110 °C for 30 minutes in a state the copper foil had been adhered to the silver paste portion before curing. The above carbon layer, silver layer, and copper foil layer corresponded to the cathode foil of the solid electrolytic capacitor.

The solid electrolytic capacitor of the examples 1 was produced as described above. The crystallinity of the conductive polymer in the solid electrolytic capacitor of the examples 1 was measured. Firstly, the conductive polymer dispersion was dropped on a quartz substrate and was placed still for 30 minutes under the temperature environment of 110 °C to form conductive polymer film on the quartz substrate. The X-ray diffraction pattern of the obtained conductive polymer film was measured by a desktop X-ray diffraction instrument (MiniFlex600, Rigaku) with high speed 1D detector (D/tes Ultra Rigaku) . CuKa beam as used the X-ray source, the range of measurement angle was 2 to 50 °C, the scanning speed was 10° /min, the voltage was 40 kV, and the current was 15 mA. The total peak area of the obtained X-ray diffraction pattern, the peak area the crystal component, and the halo pattern area of the amorphous component was calculated to obtain the crystallinity. Data analysis software (Rigaku Data Analysis Software PDXL2, Rigaku) was used for the calculation. As a result, in the solid electrolytic capacitor of the example 1, the crystallinity of the conductive polymer included in the solid electrolyte was 16.4 %.

Furthermore, the solid electrolytic capacitors of the examples 2 and comparative example 1 were produced. The solid electrolytic capacitors of the examples 2 and the comparative example 1 were produced by the same production method and production condition including that the conductive polymer dispersion is poly(3,4-ethylenedioxythiophene) (PEDOT:PSS) doped with polystyrene sulfonic acid (PSS), except that the pH of the conductive polymer dispersion and the crystallinity of the conductive polymer were different, when compared with the example 1.

The pH of the conductive polymer dispersion used in the solid electrolytic capacitor of the example 2 was adjusted to pH 11. By this, the crystallinity of the conductive polymer used in the solid electrolytic capacitor of the example 2 was 14.3 %. The pH of the conductive polymer dispersion used in the solid electrolytic capacitor of the comparative example 1 was adjusted to pH 4. By this, the crystallinity of the conductive polymer used in the solid electrolytic capacitor of the comparative example 1 was 24.6 %.

The withstand voltage of the solid electrolytic capacitors of the examples 1 and 2 and the comparative example examples 2 was measured. The measurement method for the withstand voltage was as follows. Namely, voltage was applied to the solid electrolytic capacitor in the room temperature of 25 °C. Initial voltage was 100 V, and the voltage was increased by 1 V every 10 seconds. Then, the voltage when current of 1 mA flowed in the solid electrolytic capacitor was determined as the withstand voltage.

The measurement result of the withstand voltage of the solid electrolytic capacitor, the type of the conductive polymer, the pH of the conductive polymer dispersion, and the crystallinity of the conductive polymer is shown in the below table 1 together.

**[Table 1]**

| | Conductive Polymer | pH | Crystallinity (%) | Withstand Voltage (V) |
|---|---|---|---|---|
| Comparative Example 1 | PEDOT:PSS | 4 | 24.6 | 200 |
| Example 1 | PEDOT:PSS | 10 | 16.4 | 379 |
| Example 2 | PEDOT:PSS | 11 | 14.3 | 420 |

As shown in the table 1, when poly(3,4-ethylenedioxythiophene) doped with polystyrene sulfonic acid (PSS) was dispersed in the conductive polymer dispersion with pH of 10 or more, and the solid electrolyte was formed in the solid electrolytic capacitor using said conductive polymer dispersion, the crystallinity of the conductive polymer of the solid electrolyte was 20 % or less like the examples 1 and 2. Then, it was observed that the withstand voltage of the solid electrolytic capacitors of the examples 1 and 2 exceeded 250 V.

Next, the solid electrolytic capacitors of the examples 3 to 8 were produced. The type of the conductive polymer formed in the solid electrolytic capacitors of the examples 3 to 8 was different from that of the example 1. The solid electrolyte of solid electrolytic capacitor of the examples 3 to 5 included 2-ethyl-3,4-ethylenedioxythiophene (Et-PEDOT:PSS) doped with polystyrene sulfonic acid (PSS) as the conductive polymer. The solid electrolyte of solid electrolytic capacitor of the examples 6 to 8 included 2-butyl-3,4-ethylenedioxythiophene (Bu-PEDOT:PSS) doped with polystyrene sulfonic acid (PSS) as the conductive polymer.

The pH of the conductive polymer dispersion of the example 3 was pH 4, the pH of the conductive polymer dispersion of the example 4 was pH 10, and the pH of the conductive polymer dispersion of the example 5 was pH 11, Furthermore, the pH of the conductive polymer dispersion of the example 6 was pH 4, the pH of the conductive polymer dispersion of the example 7 was pH 10, and the pH of the conductive polymer dispersion of the example 8 was pH 11,

Other production method and production condition for the examples 3 to 8 were the same as the example 1. The crystallinity of the conductive polymer and the withstand voltage in the solid electrolytic capacitors of the examples 3 to 8 was measured. The measurement method and measurement condition for the crystallinity and the withstand voltage were the same as the examples 1.

The measurement result of the withstand voltage of the solid electrolytic capacitor, the type of the conductive polymer, the pH of the conductive polymer dispersion, and the crystallinity of the conductive polymer in the examples 3 to 8 is shown in the below table 2 together.

**[Table 2]**

| | Conductive Polymer | pH | Crystallinity (%) | Withstand Voltage (V) |
|---|---|---|---|---|
| Example 3 | Et-PEDOT:PSS | 4 | 13.7 | 428 |
| Example 4 | Et-PEDOT:PSS | 10 | 9.87 | 412 |
| Example 5 | Et-PEDOT:PSS | 11 | 9.66 | 389 |
| Example 6 | Bu-PEDOTPSS | 4 | 8.53 | 424 |
| Example 7 | Bu-PEDOT:PSS | 10 | 7.25 | 498 |
| Example 8 | Bu-PEDOT:PSS | 11 | 5.82 | 475 |

As shown in the table 2, it was observed that, when the 2-position of 3,4-ethylenedioxythiophene is substituted with an alkyl group, the crystallinity of the conductive polymer was 20 % or less regardless of the pH of the conductive polymer dispersion if the pH was 4 to 11. Then, it was observed that the withstand voltage of the solid electrolytic capacitors of the examples 3 and 8 with the crystallinity of 20 or less exceeded 250 V.

The solid electrolytic capacitor of the example 9 was produced. The solid electrolytic capacitor of the example 9 was produced by the same production method and same produce condition as that of the solid electrolytic capacitor of the example 6, except that the solid electrolyte included sorbitol. Sorbitol was added to the conductive polymer dispersion dropped on the anode foil so as to be included in the solid electrolyte of the solid electrolytic capacitor.

The measurement result of the withstand voltage of the solid electrolytic capacitor, the type of the conductive polymer, the pH of the conductive polymer dispersion, and the crystallinity of the conductive polymer in the example 9 is shown in the below table 3 together.

**[Table 3]**

| | Conductive Polymer | pH | Additive | Crystallinity (%) | Withstand Voltage (V) |
|---|---|---|---|---|---|
| Example 9 | Bu-PEDOT:PSS | 4 | Sorbitol | 8.53 | 508 |

As shown in the table 3, it was observed that the crystallinity of the conductive polymer did not change from 20 % or less even when sorbitol had been added. Then, it was observed that the withstand voltage of the solid electrolytic capacitors of the examples 9 with the crystallinity of 20 % or less largely exceeded 250 V.

Next, the solid electrolytic capacitors of the examples 10 to 12 were produced. The conductive polymer was poly(3,4-dioxythiophene) (PEDOT:PSS) doped with polystyrene sulfonic acid (PSS). In the conductive polymer, the weight ratio of PEDOT and the doped PSS was 1:2.5, which meant that the amount of the doped PSS was 2,5 times more than the PEDOT. The conductive polymer was dispersed in the conductive polymer dispersion in a ratio of 1 wt%. Water was used for the solvent of the conductive polymer dispersion.

Undoped PSS was added to the conductive polymer dispersion as shown in the below table 4. In the table, the total PSS x is a weight ratio of the total of the doped PSS and undoped PSS relative to PEDOT. In the table, the amount of the undoped PSS is a weight ratio of the undoped PSS relative to PEDOT.

**[Table 4]**

| | Conductive Polymer | Total PSS x PEDOTPSS=1x | Undoped PSS | pH |
|---|---|---|---|---|
| Example 10 | PEDOT:PSS | 3 | 0,5 times | 4 |
| Example 11 | PEDOT:PSS | 5 | 2.5 times | 4 |
| Example 12 | PEDOTPSS | 7.5 | 5 times | 4 |

Ammonia water with the concentration of 28 % was added to the conductive polymer dispersion containing the conductive polymer and the undoped PSS, and the conductive polymer dispersion was adjusted to pH 4. The dispersion process of the conductive polymer was performed on the conductive polymer dispersion using ultrasonic. Furthermore, ethylene glycol was added to the the conductive polymer dispersion, and the same dispersion process using ultrasonic was performed. Ethylene glycol was added so that the amount of the conductive polymer dispersion became 9 times the volume.

Other production method and production condition for the examples 10 to 12 were the same as the example 1. The crystallinity of the conductive polymer, the withstand voltage, and the capacitance (Cap) of the solid electrolytic capacitors of the examples 10 to 12 were measured. The measurement method and measurement condition for the crystallinity and the withstand voltage were the same as the examples 1. The capacitance was measured using LCR meter (ZM2376 from NF Corporation) under the room temperature. The measurement frequency of the Cap was 120 kHz, the DC bias was 1.5 V, and the DC current level was sine wave of 1.0 Vms.

The measurement result of the withstand voltage and capacitance of the solid electrolytic capacitors of the examples 10 to 12 and the comparative example 1 are shown in the below table 5 together with the crystallinity of the conductive polymer.

**[Table 5]**

| | Conductive Polymer | Total PSS x PEDOT:PSS=1x | Undoped PSS | pH | Crystallinity (%) | Withstand Voltage (V) | Capacitance (µF) |
|---|---|---|---|---|---|---|---|
| Comparative Example 1 | PEDOT:PSS | 2.5 | 0 | a | 24.6 | 200 | 0.231 |
| Example 10 | PEDOT:PSS | 3 | 0,5 times | 4 | 19.9 | 413 | 0.257 |
| Example 11 | PEDOT:PSS | 5 | 25 times | 4 | 17.3 | 430 | 0.253 |
| Example 12 | PEDOT:PSS | 7.5 | 5 times | 4 | 10.9 | 443 | 0.250 |

As shown in the below table 5, in the examples 10 to 12, the pH of the conductive polymer dispersion was pH4, and the crystallinity of the conductive polymer was 20 % or less. As a result, the withstand voltage of the solid electrolytic capacitors of the examples 11 to 14 exceeded 400 V. In particular, in the example 10, the crystallinity was 19.9 %, which was approximately the upper limit for the crystallinity that is 20 % or less, and largely exceeded 250 V. Furthermore, the capacitance was at a peak in the examples 10 and 11 and was excellent.

Accordingly, it was observed that, by adding the undoped polystyrene sulfonic acid to the conductive polymer dispersion of poly(3,4-ethylenedioxythiophene) doped with polyanions, the crystallinity was 20 % or less regardless of the pH of the conductive polymer dispersion, that is, even when the pH was pH 4.5 or less including pH 4. Then, it was observed that the withstand voltage of the solid electrolytic capacitor was improved, because the crystallinity became 20 % or less.

Furthermore, the weight ratio of the total amount of the doped polyanions and the undoped PSS relative to poly(3,4-ethylenedioxythiophene) or derivatives thereof was 2.7 times or more, including 3.0 times. Furthermore, the weight ratio of the undoped PSS relative to poly(3,4-ethylenedioxythiophene) or derivatives thereof was 0.2 times or more, including 0.5 times. By this, it was observed that the crystallinity was 20 % or less even when the pH of the conductive polymer dispersion was pH 4.5 or less, including pH 4.

Furthermore, the weight ratio of the total amount of the doped polyanions and the undoped PSS relative to poly(3,4-ethylenedioxythiophene) or derivatives thereof was 2.7 times or more including 3.0 times and 7 times or less that is lower than 7.5 times. Furthermore, the weight ratio of the undoped PSS relative to poly (3,4-ethylenedioxythiophene) or derivatives thereof was 0.2 times or more including 0.5 times and 4,5 times or less that is lower than 5 times. By this, it was observed that the solid electrolyte could achieve both excellent withstand voltage and excellent capacitance.

Here, the solid electrolytic capacitors of the examples 10 to 12 and comparative example 1 were a wound-type. That is, aluminum foil was used as the anode foil. DC etching and chemical treatment process were performed on the aluminum foil, and the aluminum foil was cut into a strip-shape. Aluminum foil was used as the cathode foil. Etching and chemical treatment process were performed on the cathode foil at constant voltage, and the cathode foil was cut into a strip-shape. The anode foil and the cathode foil were placed to face each other via a manila-paper separator, and were wound around the winding axis provided along the strip-width direction so that the band-length direction formed a spiral-shape.

The capacitor element formed by the anode foil, the cathode foil, and the separator was immersed in the conductive polymer dispersion as same as those of the examples 10 to 12 and the comparative example 1. After the conductive polymer was attached to the capacitor element by the immersion, the capacitor element was depressurized and dried, so that the solid electrolyte in which the dielectric oxide film was formed on the anode foil was formed in the capacitor element.

The capacitor element in which the solid electrolyte had been formed was inserted in the outer casing, the outer casing was sealed by the sealing body, and the lead wire was connected to the anode foil and the cathode foil was drawn out, to form the solid electrolytic capacitor. Each of the solid electrolytic capacitor was aged. The solid electrolytic capacitor had diameter of 8 mm and total length of 10 mm, rated voltage of 35 WV, and rated capacity of 150 µF.

The capacitance of the wound-type solid electrolytic capacitors of the examples 10 to 12 and the comparative example 1 was measured. The measured results of the capacitance are shown in the below table 6.

**[Table 6]**

| | Conductive Polymer | Total PSS x PEDOT:PSS=1x | Undoped PSS | pH | Capacitance (µF) |
|---|---|---|---|---|---|
| Comparative Example 1 | PEDOT:PSS | 2.5 | 0 | 4 | 140.5 |
| Example 10 | PEDOT:PSS | 3 | 0,5 times | 4 | 147.0 |
| Example 11 | PEDOT:PSS | 5 | 2.5 times | 4 | 145.7 |
| Example 12 | PEDOT:PSS | 7.5 | 5 times | 4 | 144.3 |

As shown in the examples 10 and 11 in the table 6, it was observed that the solid electrolytic capacitor in which the solid electrolyte had been formed using the conductive polymer dispersion with the pH of 4.5 or less could achieve both excellent withstand voltage and excellent capacitance even when the solid electrolytic capacitor was the wound-type.

Note that the solid electrolytic capacitor was exposed under the high-temperature environment of 150 °C for 136 hours. Even in this case, when the weight ratio of the polyanions (A) doped to the conductive polymer and the undoped PSS was A:B=2.5:0.2 to 4.5, or the weight ratio of the total amount of the doped polyanions and the undoped PSS relative to poly(3,4-ethylenedioxythiophene) or derivatives thereof was 2.7 times to 7 times, the withstand voltage was further improved and the capacitance reached the peak.

The relationship between the withstand voltage and the crystallinity was summarized in the distribution diagram of Fig. 1 based on the flat-plate type solid electrolytic capacitors of the examples 1 to 12 and the comparative example 1. As illustrated in Fig. 1, it was observed that the withstand voltage exceeded 250 V when the crystallinity was 20 % or less. Furthermore, as illustrated in Fig. 1, it was observed that when the 2-position of 3,4-ethylenedioxythiophene was substituted by an alkyl group, the withstand voltage tended to increase than the 3,4-ethylenedioxythiophene, and the withstand voltage tended to further increase when the carbon number of the alkyl group is large. Furthermore, as illustrated Fig. 1, it was observed that the crystallinity further decreased when the pH of the conductive polymer dispersion increased, and the withstand voltage of the solid electrolytic capacitor was further improved. Furthermore, it was observed that the withstand voltage largely increased when sorbitol was added. Accordingly, it is desirable to independently measure the crystallinity using the conductive polymer dispersion and used the conductive polymer dispersion containing the conductive polymer with the crystallinity of 20 % or less.

## Claims

1. A solid electrolyte formed from conductive polymer dispersion containing conductive polymers, wherein the conductive polymer is doped poly(3,4-ethylenedioxythiophene) or derivatives thereof, and crystallinity of the conductive polymer is 20 % or less.

2. The solid electrolyte according to claim 1, wherein the derivative is poly(2-ethyl-3,4-ethylenedioxythiphene) or poly(2-butyl-3,4-ethylenedioxythiphene).

3. The solid electrolyte according to claim 1 or 2, wherein the solid electrolyte includes one type or two or more types of the conductive polymer.

4. The solid electrolyte according to claim 1 or 2, wherein:
the conductive polymer is poly(3,4-ethylenedioxythiophene) doped with a polyanion, and
the solid electrolyte is formed using the conductive polymer dispersion with pH of 10 or more.

5. The solid electrolyte according to claim 1 or 2, wherein:
the conductive polymer is poly(3,4-ethylenedioxythiophene) doped with a polyanion, and
the solid electrolyte is formed using the conductive polymer dispersion containing polystyrene sulfonic acid undoped to the conductive polymer.

6. The solid electrolyte according to claim 5, wherein a weight ratio of a total amount of the doped polyanion and the undoped polystyrene sulfonic acid relative to the poly(3,4-ethylenedioxythiophene) is 2,7 time or more.

7. The solid electrolyte according to claim 5, wherein the solid electrolyte is formed using the conductive polymer dispersion with pH of 4.5 or less.

8. The solid electrolyte according to claim 1 or 2, wherein:
the conductive polymer is poly(3,4-ethylenedioxythiophene) doped with a polyanion, and
the solid electrolyte is formed using the conductive polymer dispersion with pH of 4.5 or less.

9. The solid electrolyte according to claim 1 or 2, further comprising sorbitol.

10. A solid electrolytic capacitor comprising:
the solid electrolyte according to claim 1 or 2;
anode foil and cathode foil; and
dielectric film formed by the anode foil and contacting with the solid electrolyte.

11. The conductive polymer dispersion at least containing poly(3,4-ethylenedioxythiophene) doped with a polyanion, or derivatives thereof, wherein crystallinity of the conductive polymer produced from the conductive polymer dispersion is 20 % or less.

12. A method for producing a solid electrolyte comprising transpiring at least a part of a solvent from conductive polymer dispersion which is poly(3,4-ethylenedioxythiophene) doped with a polyanion, or derivatives thereof and in which conductive polymer with crystallinity of 20 % or less is dispersed.

13. The method for producing a solid electrolyte according to claim 12, comprising:
adding undoped polystyrene sulfonic acid to the conductive polymer dispersion, and
transpiring at least a part of a solvent from the conductive polymer dispersion to which the undoped polystyrene sulfonic acid was added.

14. The method for producing a solid electrolyte according to claim 13, wherein a weight ratio of a total amount of the doped polyanion and the undoped polystyrene sulfonic acid relative to the poly(3,4-ethylenedioxythiophene) is 2,7 time or more.

15. The method for producing a solid electrolyte according to claim 12, comprising:
adjusting pH of the conductive polymer dispersion to pH 4.5 or less, and
transpiring at least a part of a solvent from the conductive polymer dispersion with the pH of 4.5 or less.

16. The method for producing a solid electrolyte according to claim 12, wherein the conductive polymer is poly(3,4-ethylenedioxythiophene) doped with a polyanion,
the method comprising:
adjusting pH of the conductive polymer dispersion to pH 4.5 or less, and
transpiring at least a part of a solvent from the conductive polymer dispersion with the pH of 4.5 or less.

17. The method for producing conductive polymer dispersion, comprising dispersing a conductive polymer which is poly(3,4-ethylenedioxythiophene) doped with a polyanion, or derivatives thereof and which crystallinity is 20 % or less in the solvent.
